# EUROPEAN PATENT SPECIFICATION

(11) **EP 2 242 666 B1**
(45) Date of publication and mention of the grant of the patent: **17.02.2016**
(21) Application number: 08872218.6
(22) Date of filing: 24.11.2008
(51) Int. Cl.: B60N 2/50

(54) **SUSPENDED SEAT AUTOLOCKING**
HÄNGENDE AUTOMATISCHE SITZSPERRE
AUTO-VERROUILLAGE DE SIÈGE SUSPENDU

(30) Priority: 05.02.2008 US 26062
(43) Date of publication of application: 27.10.2010
(73) Proprietor: Bose Corporation, Framingham, MA 01701 (US)
(72) Inventor: CLARK, Ian, Ross, Watertown Massachusetts 02472 (US)
(74) Representative: Attali, Pascal
(86) International application number: PCT/US2008/084533
(87) International publication number: WO 2009/099475

(56) References cited:
- EP-A- 0 232 647
- WO-A-01/83261
- WO-A-94/21487
- US-A- 4 913 482

## Description

### TECHNICAL FIELD

This disclosure relates to suspending a vehicle seat.

### BACKGROUND

Suspended seats employing active and/or passive suspension in vehicles increase driver comfort by dampening jolts felt by the driver along one or more axes as the vehicle moves. In so doing, such seats have been known to provide health and safety benefits to drivers, including reduction in driver fatigue over long hours of vehicle operation. Such seats do this by isolating uncomfortable movement of the vehicle from the seat such that the seat is actively caused to move and/or is passively allowed to move along one or more axes relative to the floor (or some other portion) of the vehicle. However, causing and/or allowing such movement of the seat relative to the floor (or some other portion) of the vehicle has been known to result in the hands and feet of the driver also moving relative to manually-operable controls employed in operating the vehicle as the seat moves, including and not limited to, the steering wheel, gear shifting levers and various foot pedals.

While drivers have been found to appreciate the benefits of a suspended seat during much of the time in which they are operating vehicles, there can be moments when this movement of the driver's hands and feet relative to such controls can be disquieting to drivers. On occasion, a driver finds it desirable to be able to precisely control the position of his/her foot relative to a foot pedal in order to precisely control how far the foot pedal is pushed by his/her foot. Also, on occasion, a driver finds it desirable to be able to push the foot pedal with considerable force, especially in an emergency requiring a quick response by the driver, such as suddenly braking or suddenly speeding up to avoid a hazard encountered while operating the vehicle. Although a suspended seat may, in fact, have little actual effect on the ability of a driver to operate such controls, the perception of the driver may be that he/she is in some way "out of touch" or "too disconnected" from having a "feel" for either the conditions through which his/her vehicle is traveling or how their vehicle is responding to his/her use of such controls. Also, in instances where drivers desire to push on a foot pedal with considerable force, their use of such force has been known to cause a suspended seat to move along one or more axes of movement provide by the suspension system until an end of at least one range of travel along an axis is suddenly encountered such that they feel a bump as a "bump stop" or other mechanical limiter is engaged. The resulting feeling through the seat of encountering an end of a range of travel in this way can also be disquieting to drivers.

A desire to be able to at least feel as though they are able to more precisely and/or more forcefully operate a foot pedal has caused some drivers to manually disable the suspension systems of their seats. Some drivers do this on an intermittent basis where they disable their suspension systems at times where they know they will want to be able to more precisely operate a foot pedal, especially truck drivers who are maneuvering a truck at low speeds in a truck parking lot or at loading facility where there are other trucks in motion and/or where they need to carefully back a large trailer into a loading dock location. Where drivers do this intermittently, there is the disadvantage of drivers momentarily distracting themselves with reaching for and operating whatever controls are provided to disable their suspension systems. Other drivers become frustrated enough at either the perceived effect that a seat suspension system has on their ability to operate their vehicles as they desire or the distraction of manually enabling and disabling the seat suspension system that they simply disable the seat suspension system and never use it. In both of the cases of drivers intermittently disabling their suspension systems and drivers permanently disabling them, there is the disadvantage of those drivers depriving themselves of the benefits afforded by such suspension systems.

Corresponding to the preamble of independent product claim 1 and independent method claim 11, document U.S. patent no. 4,913,482 discloses a seat suspension including a device which is responsive to a sensor which detects the condition of the road surface being traversed by the vehicle in a manner to produce relatively hard suspension characteristics when the vehicle is running on a rough road and softer characteristics when traversing a road having a smooth surface. The suspension of the vehicle if equipped with variable hardness type shock absorbers can be controlled in parallel with the seat suspension to improve the ride. Additional sensors which sense parameters such as acceleration, braking, steering angle, vehicle speed etc., can be used to control the setting of the seat suspension in addition to the basic road condition control.

### SUMMARY

An apparatus meant to be incorporated into a suspension system of a suspended seat of a vehicle acts to slow movement of the seat or to stop and hold the seat against movement along at least one axis in response to an indication of the vehicle traveling at a relatively slow speed or an indication of the vehicle's speed of travel being decreased. The indication may be received from various sources including manually-operated controls, sensors and/or controller devices within the vehicle relaying their status.

In one aspect, the present invention relates to an apparatus as set out in claim 1. Other embodiments are described in the dependent claims of claim 1.

Implementations may include, and are not limited to, one or more of the following features. The indication may be pneumatic (including using a vacuum), hydraulic or electrical in nature. The brake may be a mechanical device employing friction, and may be directly operated through a pneumatic or hydraulic form of the indication, or the brake may be an electromagnetic device. The brake may be operated in a staged manner to at first slow movement of the seat along the axis, and subsequently stop and hold the seat in place along the axis. Alternatively, whether the brake is operated to only slow movement of the seat or to both stop and hold the seat in place against movement may be determined based upon an extent to which the speed of travel of the vehicle is restricted.

In another aspect, the present invention relates to a method as set out in claim 11. Other embodiments ae described in the dependent claims of claim 11. Implementations may include, and are not limited to, one or more of the following features. Awaiting an indication that may be pneumatic (including using a vacuum), hydraulic or electrical in nature. Operating the brake in a staged manner to at first slow movement of the seat along the axis, and subsequently stop and hold the seat in place along the axis. Alternatively, determining whether to operate the brake to only slow movement of the seat or to both stop and hold the seat in place against movement based upon an extent to which the speed of travel of the vehicle is restricted.

Other features and advantages of the invention will be apparent from the description and claims that follow.

### DESCRIPTION OF THE DRAWINGS

Figure 1 depicts a seat suspension system.
Figures 2a and 2b, together, depict another seat suspension system.

### DETAILED DESCRIPTION

It should be noted that although the following discussion and accompanying figures center on implementations of a plant suspension system in which the suspended plant is a seat in which a person sits, what is disclosed in that discussion is also applicable to other implementations of plant suspension systems. Other possible forms of suspended plant include, and are not limited to, a suspended trailer floor of a tractor trailer truck, a suspended cabinet in a recreational vehicle, a suspended personnel cabin on board an airplane, a suspended pool table on board a sea vessel, and a whole suspended room on board a sea vessel. Still other possible implementations of suspended plant to which what is disclosed herein is applicable will be clear to those skilled in the art.

It should also be noted that although this discussion centers on suspension systems addressing jolts along substantially horizontal and/or vertical axes and/or planes, this should not be construed as a directional limitation. What is disclosed and claimed herein may be applied to suspension systems configured to address jolts occurring in any given direction, including in rotational directions, and may be applied regardless of how directions of movement are described (e.g., with reference to Cartesian, polar or other coordinate systems). Further, directional terms such as "horizontal" and "vertical" are meant to provide a form of shorthand description for structures that are substantially horizontal or vertical at a time when a vehicle is substantially level with the Earth or substantially plumb, and should not be taken as imposing a requirement of being precisely horizontal or vertical. As those skilled in the art will readily recognize, it is not uncommon for portions of a vehicle that are oriented substantially horizontally or vertically while the vehicle is substantially level with the Earth or substantially plumb (and therefore are referred to as "horizontal" or "vertical" for ease of discussion) to cease to actually be substantially horizontal or vertical as the vehicle is operated to climb or descend inclines, or to be otherwise positioned so as to no longer be level with the Earth or substantially plumb. This same understanding also applies to other directional terms such as "upward," "downward," "forwardly" and "rearwardly."

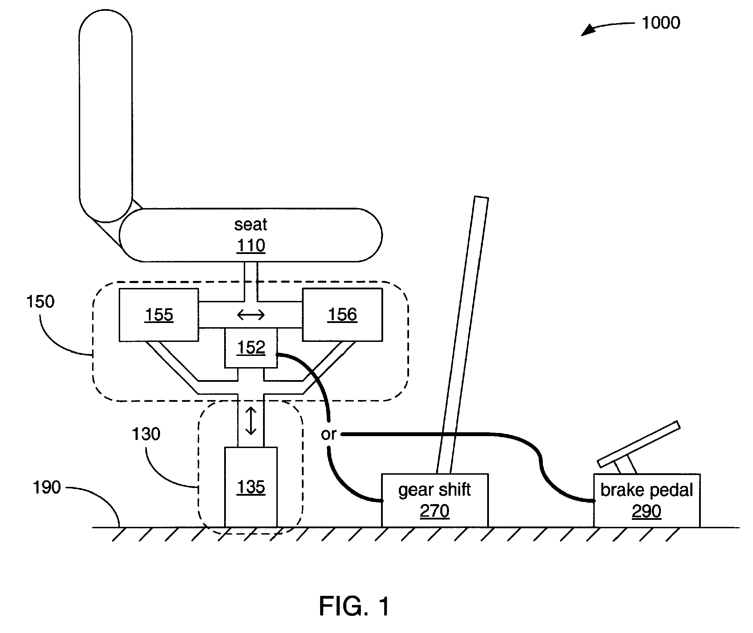

Figure 1 shows a form of seat suspension system 1000 isolating a driver from jolts in the form of vehicle movement arising from forces acting on a vehicle under the driver's control as a result of the vehicle's travel over water or terrain (e.g., waves or road bumps), or through air or water (e.g., turbulence), etc. The seat suspension system 1000 incorporates a seat 110 and one or both of a horizontal suspension system 150 that isolates the seat 110 from jolts occurring along at least one axis in a substantially horizontal plane, and a vertical suspension system 130 that isolates the seat 110 from jolts occurring along a substantially vertical axis. It should be noted that although the seat suspension system 1000 is depicted as suspending the seat 110 in relation to a vehicle floor 190, those skilled in the art will readily recognize that the seat suspension system 1000 may be employed to suspend the seat 110 in relation to any of a variety of other portions of a vehicle into which the seat suspension system 1000 is installed.

As will be explained in greater detail, the seat suspension system 1000 incorporates an "autolocking" feature in which movement by the seat 110 along at least one axis that is caused to occur by the seat suspension system 1000 as part of isolating a driver from a jolt is automatically restricted upon receipt of an indication of the vehicle's movement being restricted. More precisely, in response to receiving an indication of the vehicle traveling at a relatively slow speed and/or an indication of the vehicle traveling at a decreasing speed (i.e., decelerating), movement of the seat 110 along at least one axis is restricted such that its movement is slowed, or restricted such that its movement is stopped and the seat 110 is held in place (i.e., the seat 110 is "captured"). In this way, a driver occupying the seat 110 is given greater confidence in operating the vehicle into which the seat suspension system 1000 is installed. Where movement of the seat 110 is slowed, the resistance to movement at least ensures that if an end of a range of travel along the at least one axis is encountered, any "bump" that the driver feels upon it being encountered will be somewhat softer. Where movement of the seat 110 is stopped and the seat 110 is held in place along the at least one axis, the driver is provided with a more "solid" feeling through the seat 110 such that the driver may feel more confident of being able to apply as much force to a pedal as desired or being able to operate a pedal with as much precision as desired while the seat 110 continues to be held.

As depicted, the horizontal suspension system 150 is a passive suspension system incorporating a pair of suspension elements 155 and 156 acting in opposition to each other to counteract jolts along a single axis in a substantially horizontal plane (e.g., a "fore-aft" axis or a lateral axis). In essence, the suspension elements 155 and 156 allow the seat 110 to move along a single substantially horizontal axis to isolate a driver sitting in the seat 110 from jolts acting along that axis on the vehicle into which the seat suspension system 1000 is installed. Given the passive nature of the horizontal suspension system, as depicted, each of the elements 155 and 156 may best be described as a form of spring based on any of a wide variety of possible technologies, including and not limited to, mechanical compression or expansion springs fabricated from a material providing Hookian or similar properties, or gas springs employing the compressibility of air or another gas within a piston. However, as those skilled in the art will readily recognize, this depicted quantity, configuration and type of technology of suspension elements is but one example of a wide variety of possible quantities, configurations and types of technologies that may be employed in any given implementation of the horizontal suspension system 150. Further, other possible implementations of the horizontal suspension system 150 may be active suspension systems incorporating one or more actuators that actively move the seat 110 along at least one axis in a substantially horizontal plane under the control of a controller (not shown) that responds to indications of horizontal jolts of a vehicle. Still other possible implementations of the horizontal suspension system 150 may incorporate both active and passive suspension elements, including configurations in which passive suspension elements assist active suspension elements and configurations in which passive suspension elements serve as a backup to active suspension elements i in case of a malfunction involving active suspension elements.

As is also depicted, the horizontal suspension system 150 incorporates a braking device 152 that is separate and distinct from the suspension elements 155 and 156. As will be described in greater detail, the braking device 152 restricts movement of the seat 110 along the substantially horizontal axis along which the suspension elements 155 and 156 would otherwise allow the seat 110 to move. In some embodiments, the braking device 152 is at least partly a mechanical brake employing friction to either slow movement of the seat 110 along the substantially horizontal axis or to stop and hold the seat 110 against moving along the substantially horizontal axis. In other embodiments, the braking device 152 is at least partly a magnetic brake employing magnetic forces to perform those same functions. The incorporation of the separate and distinct braking device 152 may or may not be necessary to restrict motion along a given axis depending on various factors, including and not limited to, whether the horizontal suspension system 150 is an active or passive suspension system (or a mixture of both), and the type of technology on which the suspension elements 155 and 156 are based. In a non-claimed example, where the horizontal suspension system 150 is an active suspension system, the suspension elements 155 and 156 may simply be operated by a controller (not shown) to restrict movement by being operated either to move the seat 110 more slowly or to stop moving the seat 110 and hold the seat 110 in place. Indeed, in the case of some technologies on which the suspension elements 155 and 156 could be based, the suspension elements 155 and 156 may simply stop the seat 110 and hold it motionless along a given axis by default when not operated to move the seat 110 along that axis. In contrast, where the horizontal suspension system 150 is passive such that the suspension elements 155 and 156 are each some form of spring (as has been described), then the suspension elements 155 and 156 may not be capable of restricting movement of the seat 110 in response to the receipt of an indication of a restriction in vehicular movement, thereby making the addition of the braking device 152 necessary to do so.

As is further depicted, the vertical suspension system 130 incorporates a single suspension element 135 acting generally in opposition to the force of gravity tending to pull the seat 110 downwards towards the Earth. The vertical suspension system 130 may be a passive or active suspension system (or a mixture of the two) where movement of the seat 110 along a substantially vertical axis is allowed and/or actively caused to occur to isolate a driver sitting in the seat 110 from jolts acting along that axis on the vehicle into which the seat suspension system 1000 is installed. Where the vertical suspension system 130 is a passive suspension system, it is likely that the suspension element 135 is a form of spring relied upon to supply a countering force against gravity. In that case, and where it is desired to be able to restrict motion of the seat 110 along the substantially vertical axis along which the suspension element 135 would otherwise allow the seat 110 to move, the vertical suspension system 130 may incorporate a separate and distinct braking device (not shown). Alternatively, where the vertical suspension system 130 is an active suspension system, it is likely that the suspension element 135 is a form of actuator operated by a controller (not shown) to move the seat 110 along a vertical axis in response to indications of vertical jolts acting on a vehicle. However, as is the case with the horizontal suspension system 150, those skilled in the art will readily recognize that the depicted quantity, configuration and type of technology of suspension elements of the vertical suspension system 130 is but one example of a wide variety of possible quantities, configurations and types of technologies that may be employed in any given implementation of the vertical suspension system 130.

As previously disclosed, the seat suspension system 1000 incorporates an autolocking feature in which movement of the seat 110 along at least one axis is restricted in response to an indication of the vehicle's movement being restricted (e.g., being operated to travel at a relatively slower speed or to decelerate). Although this could encompass the restricting of movement of the seat 110 along multiple axes, for sake of simplicity of discussion, the restricting of movement will be described along only the substantially horizontal axis allowed by the suspension elements 155 and 156 of the horizontal suspension system 150. As previously discussed, the depicted implementation of the horizontal suspension system 150 is a passive suspension system, and the suspension elements 155 and 156 are each a form of spring. Therefore, for sake of discussion, it will be presumed that the separate and distinct braking device 152 is necessary to restrict movement of the seat 110 allowed along this particular axis by the suspension elements 155 and 156.

In the depicted implementation of the seat suspension system 1000, the braking device 152 is either gas-operated (e.g., pneumatically operated) or hydraulically operated. In some embodiments, the braking device 152 is operated through changes in the pressure of air supplied by a gear shift 270. As those skilled in the art of the design of large trucks will readily recognize, the gear shift 270 in a variety of large trucks typically provides a supply of air that is pressurized to either a lower pressure or a higher pressure depending on whether lower speed gears or higher speed gears of a truck transmission are being employed in the operation of a given truck. In such embodiments, where the pressure of this supply of air indicates that higher speed gears are being employed, the braking device 152 is inactive, such that the suspension elements 155 and 156 are free to allow the seat 110 to move along a substantially horizontal axis without interference from the braking device 152. However, in those embodiments, where the pressure of this supply of air indicates that lower speed gears are being employed, the braking device 152 is driven into an active state by that particular air pressure, thereby acting to restrict the movement that would otherwise be allowed to occur along that axis by the suspension elements 155 and 156. This manner of operation is based on the presumption that the driver employs the lower speed gears when operating the truck at lower speeds, and employs the higher speed gears when operating the truck at higher speeds, and therefore, these air pressures provided by the gear shift 270 are used as an indication of the speed of the truck at any given time to control the operation of the braking device 152.

In other embodiments, the braking device 152 is operated through changes in pressure of hydraulic fluid or changes in pneumatic pressure supplied by the brake pedal 290. As those skilled in the art of the design of vehicle braking systems will readily recognize, it is common practice for the operation of the brake pedal 290 to cause the operation of a plurality of hydraulic brake cylinders to pressurize hydraulic brake fluid transmitted to brakes located at multiple wheels of a vehicle. Alternatively, as those skilled in the art of the design of vehicle braking systems will also readily recognize, it is also common practice for the operation of the brake pedal 290 to cause the operation of a plurality of pneumatic brakes located at multiple wheels of a vehicle. Such hydraulic or pneumatic operation of the vehicle's brakes may be extended to include the braking device 152 to activate the braking device 152 to restrict movement of the seat 110 along a substantially horizontal axis that would otherwise be allowed to occur by the suspension elements 155 and 156, and to do so when the brake pedal 290 is operated to restrict vehicular movement by slowing (decelerating) the vehicle and/or by stopping vehicular movement. However, as those skilled in the art will further recognize, it may be necessary in some pneumatically operated braking systems to incorporate an air relay by which the pneumatic pressure and/or vacuum (i.e., a negative pressure) employed in controlling the vehicle's brakes may need to be amplified to be sufficient to activate the braking device 152.

In embodiments where the braking device 152 is pneumatically or hydraulically operated as just described, the braking device 152 may be a mechanical braking device employing friction to restrict movement of the seat 110, as has been discussed, earlier. However, regardless of the exact manner in which the braking device 152 is activated in response to an indication of vehicle movement being restricted, the restricting of motion of the seat 110 along its associated horizontal axis at least reduces the relative movement of the driver sitting in the seat 110 relative to the vehicle floor. As a result, the driver feels less movement through the seat 110 and relative movement between the driver's foot and the brake pedal 290 is restricted, thereby affording the driver a greater degree of confidence that he/she will be able to more precisely and/or more forcefully operate the brake pedal 290 as the driver desires.

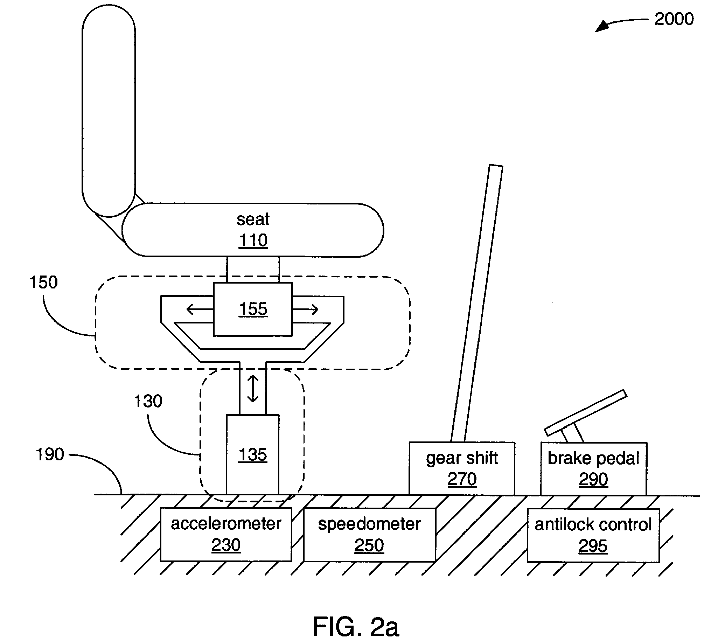

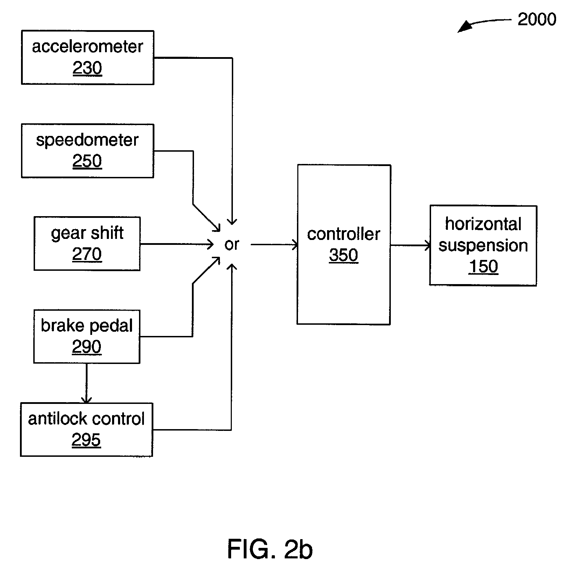

Figures 2a and 2b show portions of another seat suspension system 2000 that also isolates a driver from jolts arising from forces acting on a vehicle under the driver's control as a result of the vehicle's travel. Not unlike the seat suspension system 1000 of Figure 1 , the seat suspension system 2000 of Figures 2a and 2b incorporates a seat 110 and one or both of a horizontal suspension system 150 that isolates the seat 110 from jolts occurring along one or both of a horizontal axis and a vertical axis. It should be noted that there are a number of substantial similarities between the depicted implementations of the seat suspension systems 1000 and 2000, and therefore, corresponding structures and/or functions have been designated with identical numerical labels between them.

Not unlike the seat suspension system 1000 of Figure 1 , the seat suspension system 2000 of Figures 2a and 2b incorporates an "autolocking" feature in which movement of the seat 110 along at least one axis is restricted upon receipt of an indication of the vehicle's travel being restricted such that the vehicle is traveling at a relatively slow speed and/or at a decreasing speed. However, unlike the seat suspension system 1000, the seat suspension system 2000 does not employ changes in gas or hydraulic pressure as an indication of a slowing or stopping of a vehicle as a trigger. Instead, and as will be explained in greater detail, the seat suspension system 2000 employs one or more electrical signals as an indication of a slowing or stopping of a vehicle to trigger the restricting of movement of the seat 110 along one or more axes.

Differing from the horizontal suspension system 150 of the seat suspension system 1000, the horizontal suspension system 150 of the seat suspension system 2000 is depicted as being an active suspension system having a single suspension element 155 that actively moves the seat 110 along a single axis in a substantially horizontal plane to counteract jolts along that axis. However, as those skilled in the art will readily recognize, the depicted quantity, configuration and type of technology of suspension elements is but one example of a wide variety of possible quantities, configurations and types of technologies of suspension elements that may be employed in any given implementation of the horizontal suspension system 150. Further, as was the case with the horizontal suspension system 150 of the seat suspension system 1000, other possible implementations of the horizontal suspension system 150 of the seat suspension system 2000 may be passive suspension systems or may incorporate both active and passive suspension elements. Like the vertical suspension system 130 of the seat suspension system 1000, the vertical suspension system 130 of the seat suspension system 2000 incorporates a single suspension element 135 acting generally in opposition to the force of gravity tending to pull the seat 110 downwards towards the Earth. The vertical suspension system 130 may be a passive or active suspension system (or a mixture of the two) where movement of the seat 110 along a substantially vertical axis is allowed and/or actively caused to occur to isolate a driver sitting in the seat 110 from jolts acting along that axis on the vehicle into which the seat suspension system 1000 is installed. Where the vertical suspension system 130 is a passive suspension system, the vertical suspension system 130 may incorporate a separate and distinct braking device (not shown). However, as has already been discussed with regard to the horizontal suspension system 150, a wide variety of possible quantities, configurations and types of technologies may be employed in various possible implementations of the vertical suspension system 130.

As previously disclosed, the seat suspension system 2000 incorporates an autolocking feature in which movement of the seat 110 along at least one axis is restricted in response to an indication of the vehicle's travel being restricted such that the vehicle is traveling at a relatively slower speed or at a decreasing speed. In other words, movement of the seat 110 along the at least one axis is slowed, or movement of the seat 110 is stopped and the seat 110 is held in place along the at least one axis in response to the indication. For sake of simplicity of discussion, the restricting of movement of the seat 110 will be described along only the substantially horizontal axis as controlled by the suspension element 155 of the horizontal suspension system 150. As previously discussed, the depicted implementation of the horizontal suspension system 150 is an active suspension system, and therefore, for sake of discussion, it will be presumed that a separate and distinct braking device is not necessary to restrict movement of the seat 110, and that the suspension element 155 is structured to be operated to restrict movement of the seat 110.

As also previously disclosed, the braking device 152 in the seat suspension system 1000 is operated through either gas or hydraulic pressure. In contrast, in the seat suspension system 2000, at least one electrical signal is employed as an input to a controller 350 to cause the controller 350 to operate the suspension element 155 to function as a braking device. As more clearly depicted in Figure 2b, the electrical signal may be provided to the controller 350 from any of a number of possible sources, including and not limited to, an accelerometer 230 indicating an acceleration (including a negative acceleration, i.e., a deceleration) of the vehicle of which the vehicle floor 190 is a part, a speedometer 250 indicating the speed of the vehicle, a gear shift 270, a brake pedal 290 and an antilock brake control 295. In some embodiments, the controller 350 operates the suspension element 155 of the horizontal suspension system 150 to both counter jolts and to restrict movement of the seat 110 along at least one horizontal axis in response to receiving the electrical signal. In some embodiments, the electrical signal received by the controller 350 is a direct electrical output of one or more of the possible sources (e.g., the electrical signal employed to drive the brake lights of vehicle when the brake pedal 290 is pressed). In other embodiments, the controller 350 is coupled to an electrical bus carrying electrical signals representing commands and/or data reflecting a status of one or more of these possible sources. As those familiar with the art of the design of control systems for vehicles will readily recognize, such buses have become commonplace in coupling controller circuitry within a vehicle to various sensors and/or actuators.

Regardless of the exact manner in which an electrical signal is conveyed to the controller 350, in various embodiments, the controller 350 is triggered by the receipt of a signal from one or more possible sources providing an indication of a restricting of the vehicle's movement, such as movement at a relatively slow speed or a decreasing of the vehicle's speed. In response, the controller 350 operates the suspension element 155 to restrict the movement of the seat 110 that the controller 350 would otherwise operate the suspension element 155 to cause to occur as part of isolating the seat 110 from a jolt. This restricting of movement along at least one axis provides a driver sitting in the seat 110 with greater confidence in operating the brake pedal 290 with a greater precision and/or in operating the brake pedal 290 with greater force by causing the driver to feel less "disconnected" from movements of the vehicle and by allowing the driver to more readily feel the response of the vehicle to the driver's actions in operating it. In some embodiments, the controller 350 may evaluate the received signal to determine whether to operate the suspension element 155 to restrict movement of the seat 110 to the extent of slowing movement, or to operate the suspension element 155 to restrict movement to the extent of stopping movement of the seat 110 and holding the seat 110 in place along the at least one axis. Alternatively and/or additionally, in some embodiments, the controller 350 may evaluate the received signal to determine whether to operate the suspension element 155 to simply slow movement or to stop and hold the seat 110 against movement. Further, in some embodiments, the controller may evaluate the received signal to determine whether or not to operate the suspension element 155 in a staged manner to initially slow movement of the seat 110 and then subsequently both stop movement and hold the seat 110 in place against movement. In performing such evaluations, the controller 350 may apply one or more thresholds against which one or more characteristics of the signal may be compared (e.g., voltage, resistance, magnitude of a digitally- transmitted value, etc.) such that the suspension element 155 is operated in one way or another depending on whether or not a given threshold is met. By way of example, where the controller 350 receives a signal indicating that the accelerometer 230 detects a deceleration of the vehicle, the controller 350 may evaluate the magnitude of the deceleration, act to operate the suspension element 155 to only slow movement of the seat 110 along a given axis in response to a deceleration of a lower magnitude, and act to operate the suspension element 155 to immediately stop movement of the seat 110 and hold the seat 110 against movement along that axis in response to a deceleration of a higher magnitude. Further, the controller 350 may also act in a staged manner to initially slow movement of the seat 110 along that axis before subsequently stopping that movement and holding the seat 110 against movement in response to a deceleration of a magnitude that is between the lower and higher magnitudes. As those skilled in the art will readily recognize, other combinations of possible slowing responses and responses entailing stopping and holding against movement (i.e., restricting movement to differing extents) are possible as determined by one or more thresholds.

In some embodiments, the controller 350 may respond to combinations of signals received from more than one of the aforementioned possible sources in determining the exact manner in which to operate the suspension element 155. By way of example, the controller 350 may receive signals indicating the current speed of a vehicle as detected by the speedometer 250, while also awaiting another signal indicating that the driver has operated the brake pedal 290 to either slow or stop the vehicle. Where the signal from the speedometer 250 indicates that the vehicle is moving at a higher speed, the receipt of a signal from the brake pedal 290 indicating that the brake pedal 290 has been pressed by the driver may trigger the controller 350 to operate the suspension element 155 differently than it would if the signal from the speedometer 250 indicated a slower speed at the time that the signal from the brake pedal 290 is received. Further, how the controller 350 operates the suspension element 155 may differ still further depending on whether or not a signal is also received indicating that the antilock control 295 is being engaged to prevent one or more wheels of the vehicle from locking up as the driver is operating the brake pedal 290 to either slow or stop the vehicle.

In still other embodiments, the controller 350 may go beyond simply slowing movement of the seat 110 or both stopping and holding the seat 110 against movement along one or more axes. The controller 350 may respond to one or more signals received from one or more of the aforementioned possible sources by operating the suspension element 155 to actively move the seat 110 along those one or more axes to a predetermined position. This predetermined position may be set by the driver or someone else, and may be selected with the intention of moving the driver's foot into a more favorable location relative to the brake pedal 290 for operating the brake pedal 290 with greater precision and/or greater force. This predetermined position may be customized in response to one or more physical characteristics of the driver's body, or may be a default position determined by a purveyor (a manufacturer, vendor and/or servicer of the vehicle) to be desirable to aid in the operation of the vehicle by a particular driver or by a statistically "average- sized" driver.

## Claims

1. An apparatus comprising:
a seat of a vehicle (110);
a suspension system (1000; 150; 130) incorporating at least one suspension element (155; 156; 135) coupling the seat (110) to an interior portion of the vehicle and isolating the seat (110) from a jolt encountered by the vehicle along an axis during travel; and
a brake (152) incorporated into the suspension system (1000; 150; 130) and structured to restrict movement of the seat (110) relative to a manually-operable control (270; 290) of the vehicle along the axis in response to receiving an indication of a restriction in speed of vehicle travel,
**characterized in that**
the brake (152) is separate and distinct from the at least one suspension element (155; 156; 135) of the suspension system (1000; 150; 130).

2. The apparatus of claim 1, wherein the seat (110) is a driver's seat of the vehicle.

3. The apparatus of claim 2, wherein the manually-operable control is a brake pedal (290) of the vehicle, and wherein the brake (152) is structured to restrict movement of the seat (110) along the axis in response to receiving an indication of the brake pedal (290) of the vehicle being operated to restrict the speed of vehicle travel.

4. The apparatus of claim 2, wherein the manually-operable control is a gear shift control (270) of the vehicle, and wherein the brake (152) is structured to restrict movement of the seat along the axis in response to receiving an indication of the gear shift control (270) being operated to select a low speed gear.

5. The apparatus of claim 1, wherein the axis is selected to be substantially horizontal at a time when the vehicle is substantially level.

6. The apparatus of claim 1, wherein the suspension system (1000; 150; 130) incorporates at least one passive suspension element (155; 156; 135).

7. The apparatus of claim 1, wherein the brake (152) is structured to be pneumatically operated such that the brake (152) restricts movement of the seat (110) along the axis in response to a pneumatic pressure within a preselected range of pressures, wherein the pneumatic pressure is selected from a group of pressures consisting of a positive pressure and a vacuum.

8. The apparatus of claim 7, wherein the pneumatic pressure within the preselected range of pressures is the indication of a restriction in the speed of vehicle travel and indicates that the speed of vehicle travel is being restricted to a relatively slow speed.

9. The apparatus of claim 1, wherein the brake (152) is structured to be hydraulically operated such that the brake restricts movement of the seat (110) along the axis in response to a hydraulic pressure within a preselected range of pressures.

10. The apparatus of claim 9, wherein the hydraulic pressure within the preselected range of pressures is the indication of a restriction in the speed of vehicle travel and indicates that the speed of vehicle travel is being restricted by operation of a vehicle brake to decelerate the vehicle.

11. A method comprising:
awaiting an indication a restriction in speed of travel of a vehicle; and
in response to receiving the indication, operating a brake (152) to restrict movement of a seat (110) of the vehicle relative to a manually-operable control of the vehicle along an axis of a suspension system (1000; 150; 130) including at least one suspension element (155; 156; 135) installed within the vehicle to isolate the seat (110) from a jolt encountered by the vehicle along the axis during travel,
**characterized in that**
the brake (152) is separate and distinct from the at least one suspension element (155; 156; 135) of the suspension system (1000; 150; 130).

12. The method of claim 11, wherein awaiting the indication comprises awaiting an occurrence of a pneumatic pressure indicating that vehicle speed is being restricted to a relatively slow speed, and wherein restricting movement of the seat (110) comprises employing the pneumatic pressure to pneumatically operate the brake (152) to restrict movement of the seat (110) along the axis.

13. The method of claim 11, wherein awaiting the indication comprises awaiting an electrical signal conveyed through a digital serial bus conveying vehicle status information.

14. The method of claim 11, wherein awaiting the indication comprises awaiting a signal originating from at least one device selected from the group of devices consisting of a brake pedal (290), a manually-operable gear selector (270), an anti-lock brake controller (295), a speedometer (250) and an accelerometer (230).

15. The method of claim 11, further comprising:
receiving an indication of an extent of the restriction in speed of vehicle travel with the received indication;
restricting movement of the seat (110) along the axis to the extent of slowing movement of the seat (110) along the axis in response to an indication of a first extent of restriction in speed of vehicle travel; and
restricting movement of the seat (110) along the axis to the extent of both stopping movement of the seat along the axis and holding the seat (110) in place along the axis in response to an indication of a second extent of restriction in speed of vehicle travel.

## Patentansprüche

1. Vorrichtung, folgendes umfassend:
einen Sitz eines Fahrzeugs (110);
ein Federungssystem (1000; 150; 130), das zumindest ein Federungselement (155; 156; 135) umfasst, das den Sitz (110) mit einem inneren Abschnitt des Fahrzeugs verbindet und den Sitz (110) von einem Ruck isoliert, dem das Fahrzeug während der Fahrt entlang einer Achse ausgesetzt ist; und
eine Bremse (152), die im Federungssystem (1000; 150; 130) enthalten ist, und strukturiert ist, um die Bewegung des Sitzes (110) im Verhältnis zu einer von Hand betätigbaren Steuerung (270; 290) des Fahrzeugs entlang der Achse als Rekation auf den Empfang eines Hinweises einer Geschwindigkeitsbeschränkung der Fahrzeugfahrt zu beschränken,
**dadurch gekennzeichnet, dass**
die Bremse (152) von dem zumindest einen Federungselement (155; 156; 135) des Federungssystems (1000; 150; 130) getrennt und eigenständig ist.

2. Vorrichtung nach Anspruch 1, wobei der Sitz (110) ein Fahrersitz des Fahrzeugs ist.

3. Vorrichtung nach Anspruch 2, wobei die von Hand betätigbare Steuerung ein Bremspedal (290) des Fahrzeugs ist, und wobei die Bremse (152) strukturiert ist, um die Bewegung des Sitzes (110) entlang der Achse als Reaktion auf den Empfang eines Hinweises des Bremspedals (290) des Fahrzeugs zu beschränken, das betätigt wird, um die Geschwindigkeit der Fahrzeugfahrt zu beschränken.

4. Vorrichtung nach Anspruch 2, wobei die von Hand betätigbare Steuerung eine Gangschaltungssteuerung (270) des Fahrzeugs ist, und wobei die Bremse (152) strukturiert ist, um die Bewegung des Sitzes entlang der Achse als Reaktion auf den Empfang eines Hinweises der Gangschaltungssteuerung (270) zu beschränken, die betätigt wird, um einen Langsamgang auszuwählen.

5. Vorrichtung nach Anspruch 1, wobei die Achse zu einer Zeit im Wesentlichen horizontal gesetzt wird, zu der das Fahrzeug im Wesentlichen waagrecht ist.

6. Vorrichtung nach Anspruch 1, wobei das Federungssystem (1000; 150; 130) zumindest ein passives Federungselement (155; 156; 135) umfasst.

7. Vorrichtung nach Anspruch 1, wobei die Bremse (152) strukturiert ist, um pneumatisch betätigt zu werden, sodass die Bremse (152) die Bewegung des Sitzes (110) entlang der Achse als Reaktion auf einen Pneumatikdruck innerhalb eines vorgewählten Druckbereiches einschränkt, wobei der Pneumatikdruck aus einer Gruppe von Pneumatikdrücken ausgewählt wird, die sich aus einem positiven Druck und einem Vakuum zusammensetzt.

8. Vorrichtung nach Anspruch 7, wobei der Pneumatikdruck innerhalb des vorgewählten Druckbereiches der Hinweis auf eine Geschwindigkeitsbeschränkung der Fahrzeugfahrt ist und angibt, dass die Geschwindigkeit der Fahrzeugfahrt auf eine relativ geringe Geschwindigkeit beschränkt ist.

9. Vorrichtung nach Anspruch 1, wobei die Bremse (152) strukturiert ist, um hydraulisch betätigt zu werden, sodass die Bremse die Bewegung des Sitzes (110) entlang der Achse als Reaktion auf einen Hydraulikdruck innerhalb eines vorgewählten Druckbereichs einschränkt.

10. Vorrichtung nach Anspruch 9, wobei der Hydraulikdruck innerhalb des vorgewählten Druckbereichs der Hinweis auf eine Geschwindigkeitsbeschränkung der Fahrzeugfahrt ist und angibt, dass die Geschwindigkeit der Fahrzeugfahrt durch die Betätigung einer Fahrzeugbremse beschränkt wird, um das Fahrzeug zu verlangsamen.

11. Verfahren, folgendes umfassend:
Erwartung eines Hinweises auf eine Geschwindigkeitsbeschränkung bei der Fahrt eines Fahrzeugs; und als Reaktion auf den Empfang eines Hinweises die Betätigung einer Bremse (152) zum Einschränken der Bewegung eines Sitzes (110) des Fahrzeugs im Verhältnis zu einer von Hand betätigbaren Steuerung des Fahrzeugs entlang einer Achse eines Federungssystems (1000; 150; 130), das zumindest ein Federungselement (155; 156; 135) umfasst, das innerhalb des Fahrzeugs installiert ist, um den Sitz (110) von einem Ruck zu isolieren, dem das Fahrzeug während der Fahrt entlang der Achse ausgesetzt ist,
**dadurch gekennzeichnet, dass**
die Bremse (152) von dem zumindest einen Federungselement (155; 156; 135) des Federungssystems (1000; 150; 130) getrennt und eigenständig ist.

12. Verfahren nach Anspruch 11, wobei die Erwartung des Hinweises die Erwartung eines Auftretens eines Pneuamatikdrucks umfasst, der darauf hinweist, dass die Fahrzeuggeschwindigkeit auf eine relativ niedrige Geschwindigkeit beschränkt ist, und wobei die Einschränkung der Bewegung des Sitzes (110) die Verwendung des Pneumatikdrucks umfasst, um die Bremse (152) pneumatisch zu betätigen, um die Bewegung des Sitzes (110) entlang der Achse einzuschränken.

13. Verfahren nach Anspruch 11, wobei wobei die Erwartung des Hinweises die Erwartung eines Auftretens eines elektrischen Signals umfasst, das durch einen digitalen seriellen Bus übertragen wird, der Fahrzeugstatusinformationen überträgt.

14. Verfahren nach Anspruch 11, wobei die Erwartung des Hinweises die Erwartung eines Signals aus zumindest einem Gerät umfasst, das aus der Gruppe von Geräten ausgewählt wird, die sich aus einem Bremspedal (290), einer von Hand betätigbaren Gangschaltungssteuerung (270), einem Antiblockiersystem (295), einem Geschwindigkeitsmesser (250) und einem Beschleunigungsmesser (230) zusammensetzt.

15. Verfahren nach Anspruch 11, das darüber hinaus folgendes umfasst:
Empfang eines Hinweises auf ein Ausmaß der Geschwindigkeitsbeschränkung der Fahrzeugfahrt mit dem empfangenen Hinweis;
Einschränken der Bewegung des Sitzes (110) entlang der Achse auf das Ausmaß der Verlangsamungsbewegung des Sitzes (110) entlang der Achse als Reaktion auf einen Hinweis auf ein erstes Ausmaß der Geschwindigkeitsbeschränkung der Fahrzeugfahrt; und
Einschränken der Bewegung des Sitzes (110) entlang der Achse auf das Ausmaß von sowohl der Stoppbewegung des Sitzes entlang der Achse, als auch vom Halten des Sitzes (110) an der Stelle entlang der Achse als Reaktion auf einen Hinweis eines zweiten Ausmaßes der Geschwindigkeitsbeschränkung der Fahrzeugfahrt.

## Revendications

1. Appareil comprenant :
un siège d'un véhicule (110) ;
un système de suspension (1000 ; 150 ; 130) incorporant au moins un élément de suspension (155; 156; 135) couplant le siège (110) à une partie intérieure du véhicule et isolant le siège (110) d'un choc rencontré par le véhicule le long d'un axe pendant le déplacement ; et
un frein (152) incorporé dans le système de suspension (1000 ; 150 ; 130) et structuré pour restreindre le mouvement du siège (110) par rapport à une commande actionnable manuellement (270 ; 290) du véhicule le long de l'axe en réponse à la réception d'une indication d'une restriction de vitesse de déplacement du véhicule,
**caractérisé en ce que**
le frein (152) est séparé et distinct de l'au moins un élément de suspension (155 ; 156 ; 135) du système de suspension (1000 ; 150 ; 130).

2. Appareil selon la revendication 1, dans lequel le siège (110) est un siège de conducteur du véhicule.

3. Appareil selon la revendication 2, dans lequel la commande actionnable manuellement est une pédale de frein (290) du véhicule et dans lequel le frein (152) est structuré pour restreindre le mouvement du siège (110) le long de l'axe en réponse à la réception d'une indication d'actionnement de la pédale de frein (290) du véhicule pour restreindre la vitesse de déplacement du véhicule.

4. Appareil selon la revendication 2, dans lequel la commande actionnable manuellement est une commande de levier de vitesses (270) du véhicule et dans lequel le frein (152) est structuré pour restreindre le mouvement du siège le long de l'axe en réponse à la réception d'une indication d'actionnement de la commande de levier de vitesses (270) pour sélectionner un rapport de vitesse bas.

5. Appareil selon la revendication 1, dans lequel l'axe est sélectionné pour être sensiblement horizontal à un moment où le véhicule est sensiblement de niveau.

6. Appareil selon la revendication 1, dans lequel le système de suspension (1000 ; 150 ; 130) incorpore au moins un élément de suspension passive (155 ; 156 ; 135).

7. Appareil selon la revendication 1, dans lequel le frein (152) est structuré pour être actionné pneumatiquement de sorte que le frein (152) restreigne le mouvement du siège (110) le long de l'axe en réponse à une pression pneumatique dans une étendue de pressions présélectionnée, dans lequel la pression pneumatique est sélectionnée dans un groupe de pressions composées d'une pression positive et d'un vide.

8. Appareil selon la revendication 7, dans lequel la pression pneumatique dans l'étendue de pressions présélectionnée est l'indication d'une restriction de vitesse de déplacement du véhicule et indique que la vitesse de déplacement du véhicule est en train d'être restreinte à une vitesse relativement faible.

9. Appareil selon la revendication 1, dans lequel le frein (152) est structuré pour être actionné hydrauliquement de sorte que le frein restreigne le mouvement du siège (110) le long de l'axe en réponse à une pression hydraulique dans une étendue présélectionnée de pressions.

10. Appareil selon la revendication 9, dans lequel la pression hydraulique dans l'étendue présélectionnée de pressions est l'indication d'une restriction de vitesse de déplacement du véhicule et indique que la vitesse de déplacement du véhicule est en train d'être restreinte par l'actionnement d'un frein de véhicule pour décélérer le véhicule.

11. Procédé comprenant :
la temporisation d'une indication d'une restriction de vitesse de déplacement d'un véhicule ; et
en réponse à la réception de l'indication, l'actionnement d'un frein (152) pour restreindre le mouvement d'un siège (110) du véhicule par rapport à une commande actionnable manuellement du véhicule le long d'un axe d'un système de suspension (1000 ; 150 ; 130) incluant au moins un élément de suspension (155 ; 156 ; 135) installé dans le véhicule pour isoler le siège (110) d'un choc rencontré par le véhicule le long de l'axe pendant le déplacement,
**caractérisé en ce que**
le frein (152) est séparé et distinct de l'au moins un élément de suspension (155 ; 156 ; 135) du système de suspension (1000 ; 150 ; 130).

12. Procédé selon la revendication 11, dans lequel la temporisation de l'indication comprend la temporisation d'une occurrence d'une pression pneumatique indiquant que la vitesse du véhicule est en train d'être restreinte à une vitesse relativement faible, et dans lequel le mouvement de restriction du siège (110) comprend l'emploi de la pression pneumatique pour actionner pneumatiquement le frein (152) pour restreindre le mouvement du siège (110) le long de l'axe.

13. Procédé selon la revendication 11, dans lequel la temporisation de l'indication comprend la temporisation d'un signal électrique transporté par un bus série numérique transportant des informations d'état de véhicule.

14. Procédé selon la revendication 11, dans lequel la temporisation de l'indication comprend la temporisation d'un signal provenant d'au moins un dispositif sélectionné dans le groupe des dispositifs composés d'une pédale de frein (290), d'un sélectionneur de vitesses actionnable manuellement (270), d'un contrôleur de freinage antiblocage (295), d'un compteur de vitesse (250) et d'un accéléromètre (230).

15. Procédé selon la revendication 11, comprenant en outre :
la réception d'une indication d'une étendue de la restriction de vitesse de déplacement du véhicule avec l'indication reçue ;
la restriction du mouvement du siège (110) le long de l'axe à l'étendue de mouvement de ralentissement du siège (110) le long de l'axe en réponse à une indication d'une première étendue de restriction de vitesse de déplacement du véhicule ; et
la restriction du mouvement du siège (110) le long de l'axe à la fois à l'étendue de mouvement d'arrêt du siège le long de l'axe et d'arrêt du siège (110) en place le long de l'axe en réponse à une indication d'une seconde étendue de restriction de vitesse de déplacement du véhicule.
